(19) Europäisches Patentamt
European Patent Office
Office européen des brevets

(11) Publication number: 0 076 576 B1

(12) **EUROPEAN PATENT SPECIFICATION**

(45) Date of publication of patent specification: **22.04.87**

(51) Int. Cl.[4]: **C 08 F 10/00,** C 08 F 4/74

(21) Application number: **82304768.3**

(22) Date of filing: **10.09.82**

(54) **Use of a catalyst and process for polymerizing olefins.**

(30) Priority: **24.09.81 US 305233**
**27.10.81 US 315827**
**30.12.81 US 336105**

(43) Date of publication of application:
**13.04.83 Bulletin 83/15**

(45) Publication of the grant of the patent:
**22.04.87 Bulletin 87/17**

(84) Designated Contracting States:
**BE DE FR GB IT NL SE**

(56) References cited:
**US-A-3 702 886**
**US-A-3 709 853**
**US-A-3 798 250**
**US-A-3 844 975**
**US-A-4 015 059**
**US-A-4 016 245**
**US-A-4 076 842**

(73) Proprietor: **MOBIL OIL CORPORATION**
**150 East 42nd Street**
**New York New York 10017 (US)**

(72) Inventor: **Murray, James Gordon**
**9 Lycoming Lane**
**East Brunswick New Jersey (US)**
Inventor: **Chester, Arthur Warren**
**517 Country Club Drive**
**Cherry Hill New Jersey (US)**
Inventor: **Schwartz, Albert B.**
**1901 John F. Kennedy Blvd. Apt. 120**
**Philadelphia PA (US)**

(74) Representative: **Cooper, John Anthony et al**
**Mobil Court 3 Clements Inn**
**London WC2A 2EB (GB)**

**EP 0 076 576 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the use of a catalyst and process for polymerizing 1-olefins, such as ethylene.

Many catalyst systems are known for effecting polymerization of 1-olefins. For example, pi-bonded organochromium [II] compounds and alkyltitanium or alkylchromium compounds are known to be effective in promoting polymerization of olefins. However, these compounds by themselves are incapable of initiating the polymerization reaction. In addition, many alkyltitanium and alkylchromium compounds are stable only at very low temperatures, e.g. −20°C or lower, when stabilizing liquids are removed. Thus, in order to improve stability and/or polymerization catalytic activity, it is known to adsorb or deposit these compounds on inorganic oxide catalyst support materials having high surface area. By way of example, US—A—3,709,853 discloses bis-(cyclopentadienyl) chromium [II] compounds supported on a variety of porous, amorphous silica materials to form effective ethylene polymerization catalysts. Similarly, US—A—3,798,250 and US—A—3,875,132 disclose tetraalkylchromium compounds extended on silica support materials as catalysts for the polymerization of 1-olefins.

In addition, it is known to use high surface area silicas and silica-aluminas as supports for transition metal ethylene polymerization catalysts of the Phillips type. Such catalysts are produced by impregnating the supports with chromium salts, whereafter the impregnated supports are calcined and chemically reduced to produce stabilized low valency transition metal catalysts.

In one aspect, the present invention resides in use of a catalyst composition for promoting polymerization of 1-olefins, comprising a catalytically active chromium or titanium component and a porous, crystalline zeolite having a silica to alumina mole ratio of at least 12 and a Constraint Index of 1 to 12.

The catalytically active chromium or titanium component contained by the catalyst composition may comprise:—

a) a pi-bonded organochromium [II] compound such as chromocene (dicyclopentadienyl chromium),

b) chromium ion exchanged with the zeolite, or

c) an organometallic compound of the formula:—

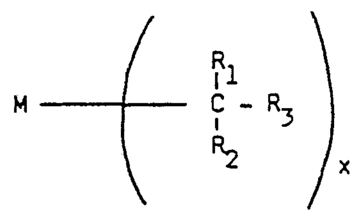

wherein

M is a metal selected from titanium or chromium;

$R_1$ and $R_2$ are each selected from H and methyl;

$R_3$ is H, alkyl, cyclohexyl, alkylcyclohexyl, cyclohexylalkyl, phenyl, alkylphenyl, benzyl or dimethylbenzyl; and

x is 3 or 4.

In a further aspect the invention resides in a process for polymerizing 1-olefins utilizing the catalyst composition described above.

The crystalline zeolite component of the catalyst composition is a member of a particular class of zeolitic materials which exhibit unusual properties. Although these zeolites have unusually low alumina contents, i.e. a silica to alumina mole ratio of at least 12, they are very active even when the silica to alumina mole ratio exceeds 30. The activity is surprising, since catalytic activity is generally attributed to framework aluminum atoms and/or cations associated with these aluminum atoms. These zeolites retain their crystallinity for long periods in spite of the presence of steam at high temperature which induces irreversible collapse of the framework of other zeolites, e.g. of the X and A type. Furthermore, carbonaceous deposits, when formed, may be removed by burning at higher than usual temperatures to restore activity. These zeolites, used as catalysts, generally have low coke-forming activity and therefore are conducive to long times on stream between regenerations by burning carbonaceous deposits with oxygen-containing gas such as air.

An important characteristic of the crystal structure of this particular class of zeolites is that it provides a selective constrained access to and egress from the intracrystalline free space by virtue of having an effective pore size intermediate between the small pore Linde A and the large pore Linde X, i.e. the pore windows of the structure are of about a size such as would be provided by 10-membered rings of silicon atoms interconnected by oxygen atoms. It is to be understood, of course, that these rings are those formed by the regular disposition of the tetrahedra making up the anionic framework of the crystalline zeolite, the oxygen atoms themselves being bonded to the silicon (or aluminum, etc.) atoms at the centers of the tetrahedra.

The silica to alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with a

silica to alumina mole ratio of at least 12 are useful, it is preferred in some instances to use zeolites having substantially higher silica/alumina ratios, e.g. 1600 and above. In addition, zeolites as otherwise characterized herein but which are substantially free of aluminum, that is zeolites having silica to alumina mole ratios of up to infinity, are found to be useful and even preferable in some instances. Such "high silica" or "highly siliceous" zeolites are intended to be included within this description. Also to be included within this definition are substantially pure silica analogs of the useful zeolites described herein, that is to say those zeolites having no measurable amount of aluminum (silica to alumina mole ratio of infinity) but which otherwise embody the characteristics disclosed.

Members of this particular class of zeolites, after activation, acquire an intracrystalline sorption capacity for normal hexane which is greater than that for water, i.e. they exhibit "hydrophobic" properties. This hydrophobic character can be used to advantage in some applications.

Zeolites of the particular class useful herein have an effective pore size such as to freely sorb normal hexane. In addition, their structure must provide constrained access to larger molecules. It is sometimes possible to judge from a known crystal structure whether such constrained access exists. For example, if the only pore windows in a crystal are formed by 8-membered rings of silicon and aluminum atoms, then access by molecules of larger cross-section than normal hexane is excluded and the zeolite is not of the desired type. Windows of 10-membered rings are preferred, although in some instances excessive puckering of the rings or pore blockage may render these zeolites ineffective.

Although 12-membered rings in theory would not offer sufficient constraint to produce advantageous conversions, it is noted that the puckered 12-ring structure of TMA offretite does show some constrained access. Other 12-ring structures may exist which may be operative for other reasons and, therefore, it is not the present intention to entirely judge the usefulness of a particular zeolite solely from theoretical structural considerations.

Rather than attempt to judge from crystal structure whether or not a zeolite possesses the necessary constrained access to molecules of larger cross-section than normal paraffins, a simple determination of the "Constraint Index" is used. The meaning of Constraint Index and its method of determination are fully described in, for example, US—A—3,905,515. Thus the zeolites used herein have a Constraint Index of 1 to 12.

The preferred zeolites used herein are ZSM—5, ZSM—11, ZSM—12, ZSM—23, ZSM—35, ZSM—38, ZSM—48 and other similar materials, with ZSM—5 being especially preferred.

ZSM—5 is described in US—A—3,702,886 and US—E—29,948. ZSM—11 is described in US—A—3,709,979. ZSM—12 is described in US—A—3,832,449. ZSM—23 is described in US—A—4,076,842. ZSM—35 is described in US—A—4,016,245. ZSM—38 is described in US—A—4,046,859. ZSM—48 is described in published EP—A—0 015 132.

The specific zeolites described, when prepared in the presence of organic cations, are substantially catalytically inactive, possibly because the intra-crystalline free space is occupied by organic cations from the forming solution. They may be activated by heating in an inert atmosphere at 540°C for one hour, for example, followed by base exchange with ammonium salts followed by calcination at 540°C in air. The presence of organic cations in the forming solution may not be absolutely essential to the formation of this type of zeolite; however, the presence of these cations does appear to favor the formation of this class of zeolite. More generally, it is desirable to activate this type catalyst by base exchange with ammonium salts followed by calcination in air at about 540°C for from about 15 minutes to about 24 hours.

Natural zeolites may sometimes be converted to zeolite structures of the class herein identified by various activation procedures and other treatments such as base exchange, steaming, alumina extraction and calcination, alone or in combinations. Natural minerals which may be so treated include ferrierite, brewsterite, stilbite, dachiardite, epistilbite, heulandite, and clinoptilolite.

Crystalline zeolites used in the present invention preferably have a crystal dimension of from 0.01 to 100 µm, more preferably from 0.02 to 10 µm.

As an additional feature, the zeolites preferably have a crystal framework density, in the dry hydrogen form, of not less than 1.6 grams per cubic centimeter. The dry crystal density for known structures may be calculated from the number of silicon plus aluminum atoms per 1000 cubic Angstroms, as described on page 19 of the article ZEOLITE STRUCTURE by W. M. Meier, PROCEEDINGS OF THE CONFERENCE ON MOLECULAR SIEVES, (London, April 1967) published by the Society of Chemical Industry, London, 1968.

When the crystal structure is unknown, the crystal framework density may be determined by classical pyknometer techniques. For example, it may be determined by immersing the dry hydrogen form of the zeolite in an organic solvent which is not sorbed by the crystal. Alternatively, the crystal density may be determined by mercury porosimetry, since mercury will fill the interstices between crystals but will not penetrate the intracrystalline free space.

When synthesized in the alkali metal form, the zeolite is conveniently converted to the hydrogen form, generally by intermediate formation of the ammonium form as a result of ammonium ion exchange and calcination of the ammonium form to yield the hydrogen form. In addition to the hydrogen form, other forms of the zeolite wherein the original alkali metal has been reduced to less than about 1.5 percent by weight may be used. Thus, the original alkali metal of the zeolite may be replaced by ion exchange with other suitable metal cations of Groups I through VIII of the Periodic Table, including for example, nickel, copper, zinc, palladium, calcium or rare earth metals. It is generally the hydrogen form of the zeolite

component which is reacted with an organometallic compound or ion exchanged with chromium to produce a catalyst according to the invention.

In practicing the olefin polymerization process of the present invention, it may be useful to incorporate the above-described crystalline zeolites with a matrix comprising another material resistant to the temperature and other conditions employed in the process. Such matrix material is useful as a binder and imparts greater resistance to the catalyst for the temperature, pressure and reactant feed stream velocity conditions encountered in, for example, polymerization processes.

Useful matrix materials include both synthetic and naturally occurring substances, as well as inorganic material such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw stage as originally mined or initially subjected to calcination, acid treatment or chemical modification.

In addition to the foregoing materials, the zeolites employed herein may be composited with a porous matrix material, such as alumina, silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesia zirconia. The matrix may be in the form of a cogel. The relative proportions of zeolite component and inorganic oxide gel matrix, on an anhydrous basis, may vary widely with the zeolite content ranging from between about 1 to about 99 percent by weight and more usually in the range of about 5 to about 80 percent by weight of the dry composite.

In a first embodiment, production of an olefin polymerization catalyst from the porous crystalline zeolite material described above is effected by reacting the zeolite material with a pi-bonded organochromium [II] compound such as fused ring bis(indenyl)- and bis-(fluorenyl)-chromium [II] compounds, and chromocene compounds.

The fused ring organochromium compounds which may be utilized have the structure:

Ar—Cr[II]Ar′

wherein Ar and Ar′ are the same or different and are indenyl radicals of the structure:

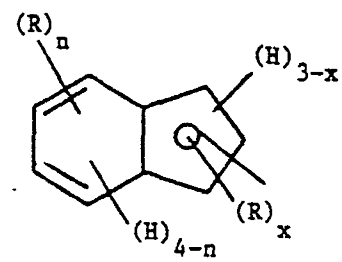

wherein the R's are the same or different $C_1$ to $C_{10}$, inclusive, hydrocarbon radicals, and n is an integer of 0 to 4, inclusive, and x is 0, 1, 2 or 3, or are fluorenyl radicals of the structure:

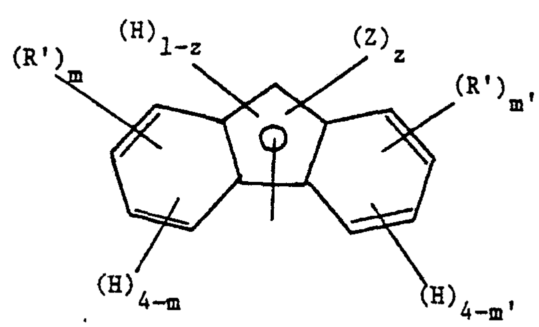

wherein the R's may be the same or different $C_1$ to $C_{10}$, inclusive, hydrocarbon radicals, and m and m′ may be the same or different integers of 0 to 4, inclusive, and Z is H or R′, and z is 0 or 1. The R and R′ hydrocarbon radicals may be saturated or unsaturated, and they may include aliphatic, alicyclic and aromatic radicals such as methyl, ethyl, propyl, butyl, pentyl, cyclopentyl, cyclohexyl, allyl, phenyl and naphthyl radicals. Such fused ring organochromium compounds are described more fully in Karol, US—A—4,015,059.

A preferred type of organochromium type compound for use in the present invention is a bis-(cyclopentadienyl) chromium [II] or "chromocene" compound having the structure:

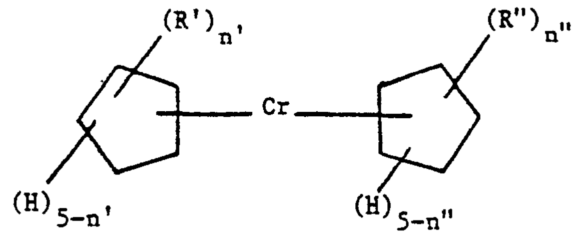

wherein each of R′ and R′′ is a hydrocarbon radical having 1 to 20 carbon atoms and each of n′ and n′′ is an integer having a value of 0 to 5 inclusive. The R′ and R′′ hydrocarbon radicals may be saturated or unsaturated and may include aliphatic radicals such as methyl, propyl, butyl, pentyl and allyl; alicyclic radicals such as cyclopentyl, cyclohexyl, and cycloheptyl; and aromatic radicals such as phenyl and naphthyl radicals.

A preferred material of this type is dicyclopentadienyl chromium which may be prepared by a variety of methods, such as by the reaction of sodium cyclopentadiene with chromous chloride which is described more fully in Brantley US—A—2,870,183, or by reacting an excess of sodium cyclopentadiene with chromic chloride.

A preferred procedure for preparing dicyclopentadienyl chromium [II] involves reacting cyclopentadienyl sodium (3 mol equivalents) with anhydrous chromium trichloride (1 mol equivalent) in tetrahydrofuran at 0°C under a nitrogen atmosphere. When this reaction is complete the solvent is evaporated off and the residue is sublimed at 70°—120°C at a pressure of 0.5 mm Hg (66.661 Pa). The sublimed crystals of dicyclopentadienyl chromium [II] have a melting point of 168°—170°C (literature melting point = 173°C). Dicyclopentadienyl chromium [II], which has the empirical formula $(C_5H_5)_2Cr$, is a reddish-purple compound having a crystalline form. It is easily oxidized and very sensitive to air.

The chromocene compounds may be prepared as described in Brantley, US—A—2,870,183 and Morehouse, US—A—3,071,605.

The foregoing organochromium compounds are liquids or solids soluble in many organic solvents, and the reaction between the organochromium compound and the zeolite is preferably carried out in the presence of a solvent. Preferred solvents are non-polar liquids at ambient temperatures which are sufficiently volatile to allow removal of solvent by evaporation. Examples of suitable solvents include alkanes, cyclo-alkanes, aromatic hydrocarbons, halogenated hydrocarbons and ethers. Exemplary solvent compounds include pentane, n-hexane, decane, cyclohexane, methylcyclohexane, benzene, xylenes, chloroform, diethyl ether, and mixtures of one or more of these compounds. A sufficient quantity of a solution of the chromium compound is used completely to wet the zeolite and fill the porous structure thereof to ensure even distribution of the chromium compound on the zeolite. Generally, the solutions contain from 0.002 to 25 weight percent of the organochromium compound.

A sufficient volume of the solution of the organochromium compound is taken so as to provide from 0.01 to 10, preferably from 0.1 to 10, most preferably from 0.25 to 1 parts by weight of the organochromium compound per 100 parts by weight of the crystalline zeolite. The contact between the zeolite and metal solution is effected in a conventional way, such as by slurrying, at any convenient temperature. Generally, ambient temperature is used, although temperatures ranging from about −80°C to as high as 100°C can be employed during the contacting period. Contact times of from about 0.1 to 10 hours are adequate. The resulting catalyst can be recovered and dried, for instance, by heating under a nitrogen atmosphere. Alternatively, polymerization reactions can be conducted in the solvent based reaction medium used to form the catalyst.

In a second embodiment, an olefin polymerization catalyst is produced by ion exchanging with chromium ions the porous, crystalline zeolite described above, preferably in the hydrogen form. The ion exchange can be effected by any of the techniques well known in the art and the ion exchanged product is then activated in a similar manner to the Phillips type catalysts by calcining in air followed by chemical reduction. This activation process is described in, for example, Journal of Polymer Science, A1, Vol. 8, pages 2637—52, 1970.

In a third embodiment, the required catalyst is produced by reacting the porous, crystalline zeolite material with a trivalent or tetravalent alkyltitanium or chromium compound. The term "alkyl" includes both straight and branched chain alkyl, cycloalkyl and alkaryl groups such as benzyl. Accordingly, the organometallic compounds used to form the polymerization catalysts of the third embodiment correspond to the general formula:

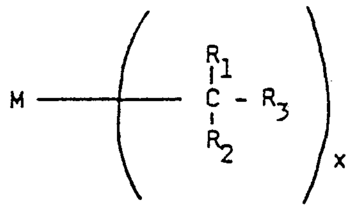

wherein

M is a metal selected from titanium and chromium;

$R_1$ and $R_2$ are each selected from H and methyl;

$R_3$ is H, alkyl, cyclohexyl, alkylcyclohexyl, cyclohexylalkyl, phenyl, alkylphenyl, benzyl, or alkylbenzyl; and

x is 3 or 4.

Examples of alkyltitanium and alkylchromium compounds encompassed by such a formula include compounds of the formula $CrY_4$, $CrY_3$, $TiY_4$ and $TiY_3$ wherein Y can be methyl, ethyl, propyl, isopropyl, butyl, isobutyl, sec-butyl, tert-butyl, pentyl, isopentyl, neopentyl, hexyl, isohexyl, neohexyl, 2-ethylbutyl, octyl, 2-ethylhexyl, 2,2-diethylbutyl or 2-isopropyl-3-methylbutyl, cyclohexylalkyls such as $-(CH_2)_n-C_6H_{11}$ where n is 1 to 4, for example, cyclohexylmethyl, 2-cyclohexylethyl, 3-cyclohexylpropyl, and 4-cyclohexylbutyl, and the corresponding alkyl-substituted cyclohexyl radicals such as, for example, (4-methylcyclohexyl)methyl, neophyl, i.e., beta, beta-dimethyl-phenethyl, benzyl, ethylbenzyl, dimethylbenzyl and p-isopropylbenzyl. Preferred organometallic compounds include tri($C_{1-5}$ alkyl) titanium, tetra($C_{1-5}$ alkyl) titanium, tri($C_{1-5}$ alkyl) chromium and tetra($C_{1-5}$ alkyl) chromium. Especially preferred organometallic compounds are trivalent and tetravalent butyltitanium and butylchromium compounds such as tributylchromium and tetrabutyltitanium.

The alkyltitanium and alkylchromium materials employed can be prepared by reacting a titanium or chromium halide with an alkyllithium compound in an organic solvent. The alkyl moiety of the alkyllithium can be any group which provides upon reaction with the titanium or chromium halide an alkyltitanium or alkylchromium compound of the type hereinbefore described. Preferably such an alkyl moiety contains from 1 to 5 carbon atoms. The molar ratio of alkyllithium compound to metal halide in the reaction medium in which such organometallic compounds are prepared generally ranges from 2:1 to 50:1, more preferably from 3:1 to 4:1.

The reaction temperature used in preparing the alkyltitanium or alkylchromium materials should be low enough to maintain the stability of the organometallic compound produced and hence generally range from −150°C to 50°C, preferably from −80°C to 0°C, depending upon the temperature stability of the particular alkyltitanium or alkylchromium compound being prepared. Reaction time generally varies between 0.01 and 10 hours, preferably from 0.1 to 1 hour. Examples of suitable solvents for the reaction medium include alkanes, cycloalkanes, aromatic hydrocarbons, halogenated hydrocarbons and ethers, such as pentane, n-hexane, decane, cyclohexane, methylcyclohexane, benzene, xylenes, chloroform, diethyl ether, and mixtures of one or more of these compounds.

The resultant alkyltitanium or alkylchromium compounds may be reacted with a crystalline aluminosilicate zeolite material in the same reaction medium used to prepare the organometallic compound simply by adding the zeolite to the reaction medium after formation of the organometallic compound has been completed. Preferably the zeolite is added in an amount sufficient to provide from 0.1 to 10 parts by weight, preferably from 0.5 to 5 parts by weight, of organometallic compound in the reaction medium per 100 parts by weight. The temperature of the reaction medium during reaction of organometallic compound with the zeolite is again maintained at a level which is low enough to ensure the stability of the organometallic reactant. Thus, temperatures in the range of from −150°C to 50°C, preferably from −80°C to 0°C can be usefully employed, with the reaction time being from 0.01 to 10 hours, more preferably from 0.1 to 1 hour. Upon completion of the organometallic/zeolite reaction, the catalyst material so formed may be recovered and dried by evaporating the reaction medium solvent under a nitrogen atmosphere. Alternatively, olefin polymerization reactions can be conducted in this same solvent based reaction medium used to form the catalyst.

The zeolite based catalysts can be used to catalyze polymerization of 1-olefins. The polymers produced using the catalysts are normally solid polymers of at least one mono-1-olefin containing from 2 to 8 carbon atoms per molecule. The catalysts are particularly useful for the preparation of high melt flow ethylene polymers. These preferred polymers are normally solid homopolymers of ethylene or copolymers of ethylene with another mono-1-olefin containing 3 to 8 carbon atoms per molecule. Exemplary copolymers include those of ethylene/propylene, ethylene/1-butene, ethylene/1-hexene, and ethylene/1-octene. The major portion of such copolymers is derived from ethylene and generally consists of about 80—99, preferably 95—99 mole percent of ethylene. These polymers are well suited for extrusion, blow molding, injection molding and the like.

The polymerization reaction can be conducted by contacting the monomer or monomers, e.g. ethylene, alone or with one or more other olefins, and in the substantial absence of catalyst poisons such as moisture and air, with a catalytic amount of the zeolite supported catalyst at a temperature and at a

pressure sufficient to initiate the polymerization reaction. If desired, an inert organic solvent may be used as a diluent and to facilitate materials handling if the polymerization reaction is conducted with the reactants in the liquid phase, e.g. in a particle form (slurry) or solution process. The reaction may also be conducted with reactants in the vapor phase, e.g., in a fluidized bed arrangement in the absence of a solvent but, if desired, in the presence of an inert gas such as nitrogen.

The polymerization reaction is generally carried out at temperatures from 30°C to 200°C, depending to a great extent on the operating pressure, the pressure of the olefin monomers, and the particular catalyst being used and its concentration. Naturally, the selected operating temperature is also dependent upon the desired polymer melt index since temperature is a factor in adjusting the molecular weight of the polymer. Preferably, the temperature used is from 30°C to 100°C in a conventional slurry or "particle forming" process or from 100°C to 150°C in a "solution forming" process. A temperature of from 70 to 110°C can be employed for fluidized bed processes.

The pressure to be used in the polymerization reactions can be any pressure sufficient to initiate the polymerization of the monomer(s) to high molecular weight polymer. The pressure, therefore, can range from subatmospheric pressures, using an inert gas as diluent, to superatmospheric pressures of up to 30,000 psig ($207 \times 10^3$ kPa) or more. The preferred pressure is from atmospheric (101 kPa) to 1000 psig (6996 kPa). As a general rule, a pressure of 20 to 800 psig (239 to 5617 kPa) is most preferred.

The selection of an inert organic solvent medium to be employed in the solution or slurry process embodiments of this invention is not critical, but the solvent should be inert to the support catalyst and olefin polymer produced, and be stable at the reaction temperature used. It is not necessary, however, that the inert organic solvent medium also serve as a solvent for the polymer to be produced. Among the inert organic solvents applicable for such purposes may be mentioned saturated aliphatic hydrocarbons having from about 3 to 12 carbon atoms per molecule such as hexane, heptane, pentane, isooctane, and purified kerosene, saturated cycloaliphatic hydrocarbons having from about 5 to 12 carbon atoms per molecule such as cyclohexane, cyclopentane, dimethylcyclopentane and methylcyclohexane and aromatic hydrocarbons having from about 6 to 12 carbon atoms per molecule such as benzene, toluene and xylene. Particularly preferred solvent media are cyclohexane, pentane, hexane and heptane.

Hydrogen can be introduced into the polymerization reaction zone in order to decrease the molecular weight of the polymers produced (i.e., give a much higher Melt Index, MI), the catalyst being particularly sensitive to the beneficial effects of introducing hydrogen to control molecular weight. In this case, the partial pressure of hydrogen would normally be within the range of 5 to 100 psig (136 to 791 kPa), preferably 25 to 75 psig (274 to 618 kPa). The melt indices of the polymers produced in accordance with the instant invention can range from 0.1 to 70 or even higher.

More detailed description of suitable polymerization conditions including examples of particle form, solution and fluidized bed polymerization arrangements are found in Karapinka, US—A—3,709,853 and Karol et al, US—A—4,086,408.

The effectiveness of the polymerization catalysts is quite surprising in view of the relatively small external surface area of the zeolite material in comparison with the external surface area of amorphous silica materials which have conventionally been employed as supports for olefin polymerization catalysts. Also it might be expected that, with a zeolite catalyst support, rapid plugging of the zeolite interior pores would occur during the polymerization reaction. Finally, the hydroxyl content of the zeolite is relatively low, and it is the hydroxyl groups which are believed to provide the site of reaction with organometallic functional groups and of ion exchange with chromium ions. Notwithstanding such potential problems which might be expected to arise from the use of zeolite based polymerization catalysts, the catalysts are in fact surprisingly effective catalysts for the polymerization of 1-olefins.

The invention will now be more particularly described with reference to the following Examples and Comparison Examples.

### Example I

A sample of HZSM—5 zeolite material (crystal size 0.05 μm, silica/alumina mole ratio = 70) was calcined overnight in a dry nitrogen stream at 500—540°C. A sample of the calcined solid (0.8 g) was suspended in dry heptane and a solution of dicyclopentadienylchromium II (chromocene) in toluene (0.16 ml of 9 percent chromocene solution) was added thereto. The mixture was stirred for 1 hour at room temperature. The resulting solution was colorless, and the HZSM—5/chromocene reaction product was reddish brown in color. No cyclopentadiene was detected in the solution above the HZSM—5.

This mixture was heated to 50°C, and ethylene (purified through a 25 percent solution of triethylaluminum at room temperature) was bubbled into the stirred mixture for 1 hour. During this time about 2.7 grams of polyethylene were formed.

### Comparison Example II

A catalyst preparation reaction and an ethylene polymerization reaction similar to those of Example I were carried out using an amorphous silica material as the chromocene support in place of the HZSM—5 zeolite. The silica used as the support material was a high surface area, amorphous silica (surface area = 300 $m^2/g$; pore volume of 1.65 $cm^3$ per gram) marketed under the tradename Davison 952 by the Davison Division of W. R. Grace and Co.

The silica material was calcined at 540°C for 16 hours. A 0.8 g sample of this calcined material was suspended in dry heptane, and a solution of dicyclopentadienyl-chromium II (chromocene) in toluene (0.16 ml. of 9 percent chromocene solution) was added thereto. The mixture was stirred for 1 hour at room temperature thereby forming a black solid chromocene/silica reaction product.

As in Example I, the mixture was heated to 50°C and ethylene (purified through a solution of triethylaluminum at room temperature) was bubbled into the stirred mixture for 1 hour. During this time, about 0.8 gram of polyethylene was formed.

Examples and Comparison Examples III—XII

Several additional polymerization screening runs were conducted in the same manner as described in Examples I and II. Polymerization catalysts, conditions and results are set forth in Table I.

TABLE I

Modified Catalysts for Ethylene Polymerization Activity

| Example or Comparison Example No. | Catalyst Description | Product | | |
|---|---|---|---|---|
| | | Total Solids | Polymer grams | Heptane Soluble |
| III | Davison 952, 0.2 g + Chromocene (0.16 ml of 9 percent soln) | 1.81 | 1.6 | 0 |
| IV | Davison 952, 0.8 g + Chromocene (0.16 ml of 9 percent soln) | 1.56 | 0.76 | 1.2 mg |
| V | Davison 952, 0.8 g + Chromocene (0.16 ml of 9 percent soln) | 1.78 | 0.98 | — |
| VI | HZSM—5, 0.8 g + Chromocene (0.16 ml of 9 percent soln) | 3.46 | 2.67 | 0 |
| VII | Davison 952, 0.8 g + Chromocene (0.16 ml of 9 percent soln) | 1.94 | 1.14 | 5.7 mg |
| VIII | Davison 952, 0.8 g + Chromocene (0.16 ml of 9 percent soln) | 1.96 | 1.15 | 0.5 mg |
| IX | HZSM—5, 0.8 g + Chromocene (0.16 ml of 9 percent soln) | 3.34 | 2.54 | 0 |
| X | HZSM—5, 0.8 g + Chromocene (0.16 ml of 9 percent soln) | 3.47 | 2.67 | — |
| XI | HZSM—11, 0.8 g + Chromocene (0.16 ml of 9 percent soln) | 3.61 | 2.81 | 0 |
| XII | HZSM—12, 0.8 g + Chromocene (0.16 ml of 9 percent soln) | 2.36 | 1.56 | — |

The Table I data indicate that the chromocene/HZSM—5 reaction product is, in general, a more effective ethylene polymerization catalyst under the conditions tested than is an analogous catalyst employing amorphous silica as the catalyst support.

Example XIII

Differences in the reaction of chromocene with a) HZSM—5 and b) amorphous silica (Davison 952) were demonstrated by the following procedure. Samples of chromocene (as a 9 percent solution in toluene) were added to a stirred mixture containing either the silica or the zeolite in heptane at room temperature. In the case of Davison 952, as much as 150 mg of chromocene/g of silica reacts rapidly with formation of a black solid and complete decolorization of the heptane solution. In the case of HZSM—5, much less of the chromocene reacts with the zeolite. As much as 37 mg of chromocene would completely react with the zeolite with complete decolorization of the heptane solution and formation of a red-brown catalyst complex with the HZSM—5. However, when the ratio of chromocene to HZSM—5 was increased to

75 mg/g or higher amounts of chromocene, the heptane solution was only partially decolorized even on reacting overnight. The very marked difference in the colors of the reaction products of chromocene with Davison 952 as compared to HZSM—5 suggests that different reactions are occurring with the two catalyst support materials.

Example XIV

A sample of HZSM—5 zeolite material (crystal size 0.05 µm, silica/alumina mole ratio = 70) was calcined overnight in a dry nitrogen stream at 500—540°C. A sample of the calcined solid (0.8 g) was suspended in dry heptane.

In a separate vessel, $TiCl_4$ (0.47 g, 2.5 m mole) contained in 10 ml of purified heptane under $N_2$ was cooled to −78°C and 10 m moles of butyllithium (3.84 ml of 2.6N solution) was added dropwise with stirring during five minutes. The solution changed from colorless to yellow to dark brown during the addition. Stirring was continued for 20 minutes at −78°C.

A portion of this resulting butyltitanium solution (0.38 ml, 0.07 m moles) was added to the stirred mixture of 0.8 g of the HZSM—5 in 40 ml of heptane at −78°C. The resulting mixture was stirred for 30 minutes at −78°C. At the end of this time, the solution had become colorless and the zeolite had become dark brown-black in color.

This mixture was heated to 50°C, and ethylene (purified through a 25 percent solution of triethylaluminum at room temperature) was bubbled into the stirred mixture for 1 hour. During this time about 2.3 grams of polyethylene were formed.

Comparison Example XV

A catalyst preparation reaction and an ethylene polymerization reaction similar to those of Example XIV were carried out using an amorphous silica material as the alkyltitanium support in place of the HZSM—5 zeolite. The silica used as the support material was a high surface area, amorphous silica (surface area = 300 $m^2/g$; pore volume of 1.65 $cm^3$ per gram) marketed under the tradename Davison 952 by the Davison Division of W. R. Grace and Co.

This silica material was calcined at 540°C for 16 hours. A 0.8 g sample of this calcined material was suspended in dry heptane, and a solution of butyltitanium in heptane (0.38 ml, 0.07 m moles) was added thereto as described in Example XIV, thereby forming a black solid alkyltitanium/silica reaction product.

As in Example XIV, the mixture was heated to 50°C and ethylene (purified through a solution of triethylaluminum at room temperature) was bubbled into the stirred mixture for 1 hour. During this time, only about 0.33 gram of polyethylene was formed.

Comparison Example XVI

A catalyst preparation reaction and an ethylene polymerization reaction similar to those of Example XV were carried out using no silica or zeolite support at all for the butyltitanium materials formed. Accordingly, a blank run was carried out wherein the butyltitanium solution of Examples XIV and XV (0.38 ml; 0.07 m moles) was added to dry heptane (40 ml) containing no silica or zeolite.

After warming to room temperature, a fine suspension of black particles formed which did not settle. Such a suspension formed only 0.17 gram of polyethylene under polymerization conditions comparable to those of Examples XIV and XV.

Example XVII

An alkylchromium based, zeolite supported catalyst, similar to the alkyltitanium based catalyst of Example XIV, was prepared as follows:

A suspension of anhydrous $CrCl_3$ (0.4 g, 2.5 m moles) in 10 ml of dimethylether at −78°C was reacted with butyllithium (2.8 ml of 2.3N, 7.5 m moles) added during two minutes. The mixture was stirred 20 minutes at −78°C during which time the solution became a dark yellow color. Ten ml of hexane were then added and the excess dimethylether removed under vacuum at low temperature.

Part of this solution (0.5 ml) was then added to 0.8 g of HZSM—5 in 40 ml of heptane at −78°C prepared as in Example XIV. The mixture was stirred for 10 minutes when the HZSM—5 had acquired a black color.

Ethylene was passed into this stirred mixture at 50°C for three hours and there was then isolated 1.38 g of polyethylene.

The data from Examples XIV—XVII demonstrate that, in the ethylene polymerization screening test involved, catalysts employing an alkyltitanium or alkylchromium active component and an HZSM—5 zeolite support are better polymerization catalysts than the alkyltitanium materials which are unsupported or supported on an amorphous silica material.

Example XVIII

a) Preparation of Cr ZSM—5 by exchange.

The equipment consisted of a four-neck flask equipped with a mechanical stirrer, condensor, thermometer and $N_2$ inlet tube. 50 g HZSM—5 was added to the flask, followed by 10.0 grams $CrCl_3.6H_2O$ in 150 ml water and 5.0 grams aluminum turnings and 0.1 gram mercuric chloride ($HgCl_2$). The mixture was stirred, heated to 82°C and held for one hour under $N_2$. The remaining Al turnings were screened out and

the zeolite separated by filtration. The zeolite was washed with water until no chloride could be detected (with $AgNO_3$) in the filtrate. The Cr ZSM—5 was calcined for 3 hours at 538°C in a nitrogen atmosphere.

b) Polymerization effectiveness.

A series of exchange reactions was carried out with acidic zeolites and chromium ions with formation of species having controlled amounts of transition metal ion at specific sites on the zeolite. The reaction products were calcined in dry air at 540°C overnight. The air was replaced with nitrogen during 10 minutes and the mixture cooled to 300°C where it was reduced in a stream of carbon monoxide during one hour. The CO was then replaced with nitrogen and mixture cooled to room temperature.

These catalysts were then screened for their ability to polymerize ethylene by passing the ethylene gas into the stirred mixture of catalyst suspended in heptane at 50°C during one hour. The level of silica and the percent chromium and effectiveness as polymerization catalysts for several zeolites are given in the following table:

| Silica | % Cr. | g used | Mg Cr | g. Polymer formed |
|---|---|---|---|---|
| HZSM—5B | 0.6 | 0.55 | 3.4 | 0.88 |
| HZSM—34 | 1.1 | 0.29 | 3.2 | 0.83 |
| HZSM—38 | 0.67 | 0.49 | 3.3 | 0.28 |

The above results are felt to show a surprisingly high polymerization activity in view of the relatively low external surface area of the catalyst, e.g., as compared to an amorphous silica.

**Claims**

1. Use of a catalyst composition for promoting polymerization of 1-olefins, comprising a catalytically active chromium or titanium component and a porous, crystalline zeolite having a silica to alumina mole ratio of at least 12 and a Constraint Index of 1 to 12.

2. Use of a catalyst composition according to claim 1 wherein said catalytically active component is a pi-bonded organochromium [II] compound.

3. Use of a catalyst composition according to claim 2 wherein the organochromium [II] compound is selected from chromocene compounds and fused ring bis-(indenyl)- and bis-(fluorenyl) chromium [II] compounds.

4. Use of a catalyst composition according to claim 2 or claim 3 wherein the organochromium compound is di(cyclopentadienyl) chromium.

5. Use of a catalyst composition according to claim 1 wherein the catalytically active component is introduced into the zeolite by ion exchange with chromium ions.

6. Use of a catalyst composition according to claim 1 wherein the catalytically active component is an organometallic compound of the formula:—

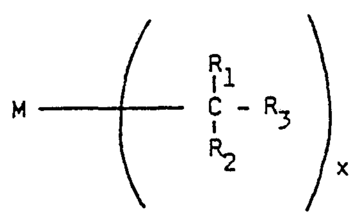

wherein

M is a metal selected from titanium or chromium;

$R_1$ and $R_2$ are each selected from H and methyl;

$R_3$ is H, alkyl, cyclohexyl, alkylcyclohexyl, cyclohexylalkyl, phenyl, alkylphenyl, benzyl or dimethylbenzyl; and

x is 3 or 4.

7. Use of a catalyst composition according to any preceding claim wherein the zeolite is selected from ZSM—5, ZSM—11, ZSM—12, ZSM—23, ZSM—35, ZSM—38 and ZSM—48.

8. Use of a catalyst composition according to any preceding claim wherein the zeolite is ZSM—5.

9. A process for polymerizing 1-olefins comprising contacting at least one 1-olefin monomer with a catalyst composition as defined in any preceding claim.

10. A process as claimed in claim 9 wherein said at least one monomer is ethylene and the polymerization is conducted at a temperature of 30—200°C and a pressure of 101—6996 kPa.

**Patentansprüche**

1. Verwendung einer Katalysatorzusammensetzung zur Förderung der Polymerisation von 1-Olefinen, die eine katalytisch aktive Chrom- oder Titankomponente und einen porösen kristallinen Zeolith umfaßt, der ein Siliciumdioxid/Aluminiumoxid-Molverhältnis von mindestens 12 und einen Zwangsindex von 1 bis 12 aufweist.

2. Verwendung der Katalysatorzusammensetzung nach Anspruch 1, worin die katalytisch aktive Komponente eine pi-gebundene Organochrom [II]-Verbindung ist.

3. Verwendung der Katalysatorzusammensetzung nach Anspruch 2, worin die Organochrom [II]-Verbindung aus Chromocen-Verbindungen und geschmolzenen bis-(Indenyl)- und bis-(Fluorenyl)chrom [II]-Ringverbindungen ausgewählt ist.

4. Verwendung der Katalysatorzusammensetzung nach Anspruch 2 oder 3, worin die Organochrom-Verbindung Di(cyclopentadienyl)chrom ist.

5. Verwendung der Katalysatorzusammensetzung nach Anspruch 1, worin die katalytisch aktive Komponente in dem Zeolith durch Ionenaustausch mit Chromionen eingebracht wird.

6. Verwendung der Katalysatorzusammensetzung nach Anspruch 1, worin die katalytisch aktive Komponente eine Organometall-Verbindung der Formel ist:

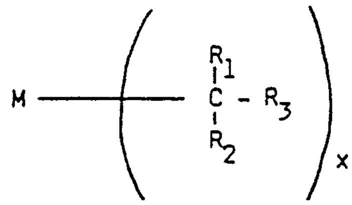

worin

M ein Metall, ausgewählt aus Titan oder Chrom ist,

$R_1$ und $R_2$ jeweils aus H und Methyl ausgewählt sind;

$R_3$ ein H, Alkyl, Cyclohexyl, Alkylcyclohexyl, Cyclohexylalkyl, Phenyl, Alkylphenyl, Benzyl oder Dimethylbenzyl ist; und

x 3 oder 4 ist.

7. Verwendung der Katalysatorzusammensetzung nach einem der vorstehenden Ansprüche, worin der Zeolith aus ZSM—5, ZSM—11, ZSM—12, ZSM—23, ZSM—35, ZSM—38 und ZSM—48 ausgewählt ist.

8. Verwendung der Katalysatorzusammensetzung nach einem der vorstehenden Ansprüche, worin der Zeolith ZSM—5 ist.

9. Verfahren zur Polymerisation von 1-Olefinen, bei dem zumindest ein 1-Olefinmonomer mit einer Katalysatorzusammensetzung nach einem der vorstehenden Ansprüche in Kontakt gebracht wird.

10. Verfahren nach Anspruch 9, worin mindestens ein Monomer Ethylen ist und die Polymerisation bei einer Temperatur von 30 bis 200°C und einem Druck von 101 bis 6996 kPa durchgeführt wird.

**Revendications**

1. Utilisation d'une composition catalytique destinée à polymériser les alpha-oléfines, comprenant un composant catalytiquement actif à base de chrome ou de titane et une zéolite cristalline poreuse dont le rapport molaire silice/alumine est au moins égal à 12 et dont l'indice de contrainte est compris entre 1 et 12.

2. Utilisation d'une composition catalytique selon la revendication 1, dans laquelle ledit composant catalytiquement actif est un composé organochrome (II) à liaison pi.

3. Utilisation d'une composition catalytique selon la revendication 2, dans laquelle le composé organochrome (II) est choisi parmi les composés chromocènes et les composés à cycle fusionné bis-(indényl)- et bis-(fluorényl)-chrome (II).

4. Utilisation d'une composition catalytique selon les revendications 2 ou 3, dans laquelle le composé organochrome est du di(cyclopentadiényl)chrome.

5. Utilisation d'une composition catalytique selon la revendication 1, dans laquelle le composé catalytiquement actif est introduit dans la zéolite par échange d'ions avec les ions chrome.

6. Utilisation d'une composition catalytique selon la revendication 1, dans laquelle le composé catalytiquement actif est un composé organométallique de formule:

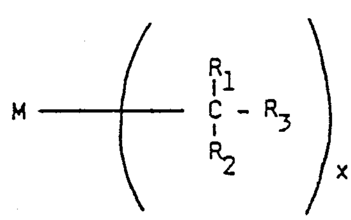

dans laquelle:

M est un métal choisi entre le titane ou le chrome;

$R_1$ et $R_2$ sont choisis chacun entre un atome d'hydrogène et un groupe méthyle;

$R_3$ représente un atome d'hydrogène ou un des groupes alkyle, cyclohexyle, alkylcyclohexyle, cyclohexylalkyle, phényle, alkylphényl, benzyle ou diméthylbenzyle; et

x a la valeur 3 ou 4.

7. Utilisation d'une composition catalytique selon l'une quelconque des revendications précédentes, dans laquelle la zéolite est choisie entre la ZSM—5, la ZSM—11, la ZSM—12, la ZSM—23, la ZSM—35, la ZSM—38 et la ZSM—48.

8. Utilisation d'une composition catalytique selon l'une quelconque des revendications précédentes, dans laquelle la zéolite est la ZSM—5.

9. Un procédé de polymérisation des alpha-oléfines comprenant la mise au contact d'au moins une alpha-oléfine monomère avec une composition catalytique définie dans l'une quelconque des revendications précédentes.

10. Un procédé selon la revendication 9, dans lequel au moins un monomère est de l'éthylène et la polymérisation est réalisée à une température comprise entre 30 et 200°C et sous une pression de 101 à 6 996 kPa.